# EUROPEAN PATENT APPLICATION

(11) **EP 1 049 045 A1**
(43) Date of publication of application: **02.11.2000**
(21) Application number: 00106752.9
(22) Date of filing: 29.03.2000
(51) Int. Cl.: G06T 5/40

(54) **Image enhancement for rasterized images**

(30) Priority: 31.03.1999 US 282968
(71) Applicant: MadeToOrder.com, Redwood City, CA 94063 (US)
(72) Inventor: Walter, Brett A., Menlo Park, CA 94025 (US); Miller, Ronald L., Carlsbad, CA 92009 (US)
(74) Representative: Schoppe, Fritz, Dipl.-Ing.

(57) **Abstract**

An image enhancement system adjusts the contrast of a digitized rasterized image, such as a scanned photograph, prior to the time that the image is printed onto transfer paper and thereafter applied using a device, such as a household iron or commercial heat press, to an article constructed of a fabric or having a fabric surface or fabric finish or directly printed onto the article to embellish the article. The contrast is increased (24) by approximately 28 to 50 percent. Also, the brightness (26) can be adjusted to enhance the applied image. The image is analyzed to locate a region of critical interest, such as a face in a scanned photograph, extreme light and dark artifacts are excluded, and the brightness is either decreased or increased based on the average brightness within the region of interest. The brightness adjustment can be capped at plus or minus 10 percent.

## Description

### BACKGROUND OF THE INVENTION

The present invention relates to apparatus and methods for manufacturing decorative articles and, more particularly, apparatus and methods for applying images to adorn an article with a decorative design. Specifically, one embodiment of the present invention provides a system for processing a rasterized image, such as an image based on a digitized artistic rendering or photograph, to enhance the image which appears on an article, for example, a T-shirt, to which the image is applied. More specifically, the preferred embodiment of the system in accordance with the present invention provides an enhanced image on an article to which an image is applied by direct printing or by using transfer paper onto which the image is printed in reverse with a printer and then transferred to the article by applying heat and pressure to the reverse side of the transfer paper to transfer the image to the article.

Many approaches for applying a decorative design to an article are known. One of the most common techniques for creating a decorative design on an article is to dye the article. Another technique is to embroider the article. A further technique is to apply a decorative design to the article by a silk screen or other process.

Additionally, a technique has been developed using a special chemically-coated transfer paper to transfer a decorative design to an article, such as a T-shirt or other item of apparel, a mouse pad, a tote bag, or any article constructed of a fabric preferably consisting of a cotton or cotton blend or having such a fabric surface or fabric finish, onto which a computer-generated or computer-processed image to be transferred is printed in reverse with a printer. One commercially available computer software application for generating and processing images is known as Hanes T-ShirtMaker™, which is configured specifically to provide a person with the ability using computer software to create a decorative design for a T-shirt, for example, print the design in reverse on chemically-coated transfer paper with his or her inkjet or laser printer, and, then using a conventional household iron or commercial heat press, transfer the image from the transfer paper onto the T-shirt. Consequently, after the person creates a decorative design, she or he can print a reverse image onto chemically-coated transfer paper using a commercially available color inkjet printer, for example, such as a Hewlett-Packard Company, Canon, or Epson color inkjet printer, next obtain a T-shirt and lay the T-shirt on a table top with the transfer paper image face down on the T-shirt, then use an ordinary household iron to apply pressure for approximately a minute and a half at the cotton setting of the iron to transfer the image onto the T-shirt, and, finally, peel the paper off Accordingly, an image can be applied as a decorative design to the T-shirt. Similarly, a decorative design can be transferred to any item of apparel or other article constructed of fabric, preferably a cotton or cotton blend, such as a tote bag, or having a fabric surface or fabric finish, such as a computer mouse pad, to which a person can transfer an image using chemically-coated transfer paper. It will be readily understood by persons skilled in the art that the foregoing process can be used to apply a decorative design to a wide variety of articles that can be embellished by decoration.

Improvements have been developed in transfer paper technology for printers since the technology was introduced. Since there has been steady improvement of the transfer paper technology, the ease with which images can be transferred and the quality of the transferred images has slowly improved. Furthermore, a thermal printer using a dye sublimation ink can be employed to print an image on ordinary paper, such as bond paper, to be used as transfer paper for transferring the image to an article. Additionally, direct-to-fabric printers are being developed for direct printing of an image onto an article constructed of fabric or having a fabric surface or fabric finish. It will be understood by persons skilled in the art that the system of the present invention for enhancing an image to be applied to an article is applicable to the use of any printer, including inkjet, laser, thermal, and direct-to-fabric printers, and any associated transfer paper used to transfer the image.

In any event, a significant application and major market for the use of the foregoing technology is to apply a photographic image to an article. Various problems arise in connection with applying a photographic image to an article. Typically, a person who applies a photographic image observes that the applied photographic image in particular is not optimal in the absence of intervention.

Considered in more detail, a person can scan a photograph or acquire a photograph with a digital camera, import the digitized photographic image into a computer application program, such as Hanes T-ShirtMaker™, and display the imported file on a computer monitor screen. Typically, what the person views on his or her computer monitor screen is much brighter and clearer than what that person observes when, for example, he or she prints that photographic image onto chemically-coated transfer paper and then subsequently irons the image onto an article, such as a T-shirt. Generally, when the image on the computer monitor screen is compared to the image applied to the article, a vast majority of persons prefers the image on the monitor to the image on the article. The image on the article is consistently said to be darker, muddier, and not as clear irrespective of the printer type or printer cartridge type or any associated transfer paper type.

That is, a person can import a digitized photographic image from a scanner or other source, such as digital camera or Hi-8 video camera, into a computer. Many variables affect the quality of the digitized photographic image. The exposure setting used when the photograph was created and how the person selected the scanner settings or, alternatively, how the person captured the photographic image with his or her digital camera affects the quality of the photograph. Since there can be a wide variation in picture quality, the variation can affect the end result of the applied image. Additionally, the printer and printer cartridge and any associated transfer paper that the person uses are also variables that affect the quality of the applied image. However, it has been determined that irrespective of the quality of the photograph and the printer and printer cartridge and any associated transfer paper used to apply the photographic image, the image displayed on the computer monitor screen is typically preferred to the image on the article, such as a T-shirt, to which the image is applied.

For example, one can begin with a professionally taken photograph that is professionally scanned or a professionally taken digital photograph. The digitized photograph can then be imported as a computer file and displayed on a computer monitor screen. Of course, the computer monitor screen displays an image using emitted light, whereas the image that a person views on a T-shirt is based on reflected light. By analogy, the difference is similar to the difference between photographic slides and prints. So one aspect of the difference is due to the medium that is used to view the image and attributable to the physical properties of light. Apparently, no one seems to have dealt with the problem of the relative inferiority of applied images to images displayed on a computer monitor screen, since the conventional wisdom is that one can never produce an image on a T-shirt to appear as good as the same image displayed on a high-resolution display. That is, persons, although they are generally disappointed, accept the fact that an applied image will be inferior to the same image displayed on a computer monitor screen. Moreover, many computer software publishers provide more general purpose programs and are typically more oriented toward paper printing and therefore have not addressed the problem of applying an image to fabric. Consequently, it is not known that any computer software publisher has attempted to solve the foregoing problem.

An unsolved need therefore exists to provide improved images and, more particularly, images applied to fabric. It would also be desirable to enable persons who do not have expertise or experience with image enhancement to produce an improved image on an article. Additionally, it would be desirable that image enhancement could occur automatically. It is also desirable that any image enhancement be efficient and be provided at minimal cost.

### SUMMARY OF THE INVENTION

In accordance with the present invention, various embodiments are provided for enhancing an image to be applied, such as a scanned photograph, a photograph acquired using a digital camera, or other digitized rasterized image. Consequently, when the enhanced image is printed using a printer, for example, a color inkjet or laser printer, onto chemically-coated transfer paper, and, subsequently, the transfer paper is placed face down on an article constructed from fabric or having a fabric surface or fabric finish and a household iron or commercial heat press is used to apply the image to the article, an improved image appears on the article.

One embodiment of the present invention provides a system for enhancing a digitized image to be applied to an article. The system comprises means preferably implemented by computer software executed on a computer for processing a digitized image and means preferably implemented by additional computer software called by the processing software for adjusting the contrast and/or the brightness of the digitized image to enhance the image prior to being applied to the article. In accordance with a preferred embodiment of the present invention, the contrast is adjusted to enhance the digitized image prior to the image being applied to the article, and, most preferably, the contrast is increased, for example, by approximately 30 to 50 percent and most preferably by approximately 28 to 37 percent.

Additionally, in accordance with the preferred embodiment, the brightness is also adjusted to enhance the digitized image prior to the image being applied to the article. The brightness is either increased or decreased by the image enhancement system. Preferably, the brightness is adjusted by not greater than approximately 10 percent. Preferably, the contrast is adjusted, and, most preferably, the contrast is increased, prior to the time that the brightness is adjusted.

The preferred embodiment further comprises means implemented by computer software for ascertaining a region of interest within the digitized image to analyze to determine an appropriate amount of brightness adjustment. After the region of interest is ascertained, predetermined extremes of light and dark are eliminated from the region of interest. Preferably, the two percent most light and 18 percent most dark artifacts are excluded. Then, the image enhancement system in accordance with the preferred embodiment of the present invention adjusts the brightness based on the average brightness after exclusion of the extremes. Preferably, the adjustment of brightness is limited to approximately 10 percent of the average brightness.

Accordingly, the image enhancement system in accordance with various embodiments of the present invention adjusts the brightness and/or contrast to enhance the digitized image prior to the image being applied to an article. The image enhancement system preferably performs the image enhancement automatically to enable persons who do not have expertise or experience with image enhancement to produce an improved image on an article.

### BRIEF DESCRIPTION OF THE DRAWINGS

The present invention is illustrated by way of example, and not by way of limitation, in the figures of the accompanying drawings and in which like reference numerals refer to similar elements and in which:
Fig.1 is a view of one embodiment of the image enhancement system in accordance with the present invention;
Fig. 1A illustrates a window displayed by the system shown in Fig. 1;
Fig. 1B illustrates another window displayed by the system shown in Fig. 1;
Fig. 2 is a flow chart of one embodiment of the method in accordance with the present invention for enhancing an image to be applied;
Fig. 3 is a detailed flow chart for adjusting the brightness of an image in accordance with the preferred method of the present invention; and
Fig. 4 illustrates ascertainment of a region of interest for analysis of the brightness of an image to facilitate an understanding of the brightness adjustment diagrammed in Fig. 3.

### DETAILED DESCRIPTION OF THE PREFERRED EMBODIMENTS

An empirical study was conducted to ascertain the effect of various identifiable variables on the quality of applied images. More specifically, sample image transfers were produced using extant technology. The extant transfer technology was tested employing a wide variety of photographs from snapshots that amateurs and hobbyists had taken and published on the Internet as gif files to high-resolution scanned professionally taken photographs and digital photographs. The digitized photographs were then transferred to cotton and cotton blend T-shirt fabric using a variety of color inkjet printers, drivers, printer cartridges, and chemically-coated transfer papers and a conventional commercial heat press. The images displayed on a computer monitor screen were universally preferred by persons as compared to the images applied to the T-shirt fabric. That is, what a person views on the computer monitor screen is considered better than the transferred image on the T-shirt.

The quality of digitized photographs will inevitably vary. Also, there is a number of manufacturers of color inkjet printers, and each manufacturer typically produces a variety of color inkjet printers and drivers for those printers. Additionally, various printer cartridges and chemically-coated transfer papers are commercially available for color inkjet printers. The color inkjet printer and transfer paper technology also continues to evolve. The quality of the applied image will inevitably vary as the color inkjet printer and transfer paper technology evolves. Nevertheless, for a given digitized photograph, the quality of the image applied to fabric can only approach the quality of the image displayed on a computer monitor screen in spite of improvements which occur in color inkjet printer and transfer paper technology.

In accordance with the present invention, a system and process are provided to enhance the image to be applied before the image is, for example, printed using a color inkjet printer onto transfer paper and thence transferred to an article. Therefore, any improvements in color inkjet printer and transfer paper technology or other technologies, such as dye sublimation printers or direct-to-fabric printers, should serve to further improve the quality of the image being applied to an article.

The system and process of the present invention effect modifications in the computer software that produces an image prior to applying the image to an article. More specifically, the starting point for the system and process in accordance with the present invention is based on observations of the use of computer software for formatting the image to be applied. It has been discovered that significant improvements in applied images can be achieved using features of any photo manipulation software, if one were to increase the contrast and adjust the brightness (which refers to lightness or darkness) of the photographic image before printing using any combination of printer, driver, printer cartridge, and any associated transfer paper.

Considered in more detail, in accordance with the present invention, it has been discovered, based on empirical tests, that increasing the contrast and adjusting the brightness of a photographic image yields a better result when that image is, for example, printed with a color inkjet printer onto transfer paper and then transferred to fabric. It has also been determined that the process of adjusting the contrast and brightness can require several hours of hit or miss trial and error manual modifications to the photographic image before one obtains an optimal application of the photographic image to a fabric. The system and process of the present invention preferably embody a computer software strategy to increase contrast and adjust brightness automatically to improve the applied image. Consequently, the system and process in accordance with the present invention provide better applied images without requiring any expertise, that is, provide better applied images automatically. The embodiments of the system and process of the present invention will now be described in more detail.

Initially, a wide variety of photographs was acquired, both high-quality photographs and low-quality photographs, including digitized photographs obtained over the Internet, digitized photographs imported from a scanner, and digitized photographs downloaded from a digital camera, to amass an extensive library of photographs. Then, a series of tests was performed with different color inkjet printers and different transfer papers. The library of photographs was printed onto transfer paper, and the printed image was then applied to a cotton or cotton blend fabric.

Based on the series of tests, it was discovered that if one increased contrast before the image was printed onto the transfer paper, the resulting applied image on the fabric exhibited an enhanced appearance compared with the original applied image having no adjustment of contrast. Moreover, it was determined that a better applied image is obtained for virtually any digitized photograph if the contrast is increased by approximately 30 to 50 percent. Generally, it was discovered that some transfers were better if contrast were increased by as much as approximately 50 percent. In any event, most transfers were improved by increasing contrast by approximately 30 percent, irrespective of the quality of the source photograph or the color inkjet printer, driver, printer cartridge, and transfer paper used to produce the transfer. More particularly, it was discovered empirically through the test process that increasing the contrast by preferably 28 to 37 percent provided a substantially improved transfer.

Empirical tests were also conducted to determine whether or not adjusting the brightness of the photographic image would enhance the appearance of the applied image. It was discovered empirically through the test process that the appearance of the applied image was almost as likely to improve by decreasing brightness as by increasing brightness. That is, for certain photographs, the applied image was better if the brightness were darkened, and, for other photographs, the applied image was better if the brightness were lightened. An analytical approach was therefore required to ascertain whether or not to adjust brightness and, if so, whether to decrease or increase brightness and the amount of the brightness adjustment.

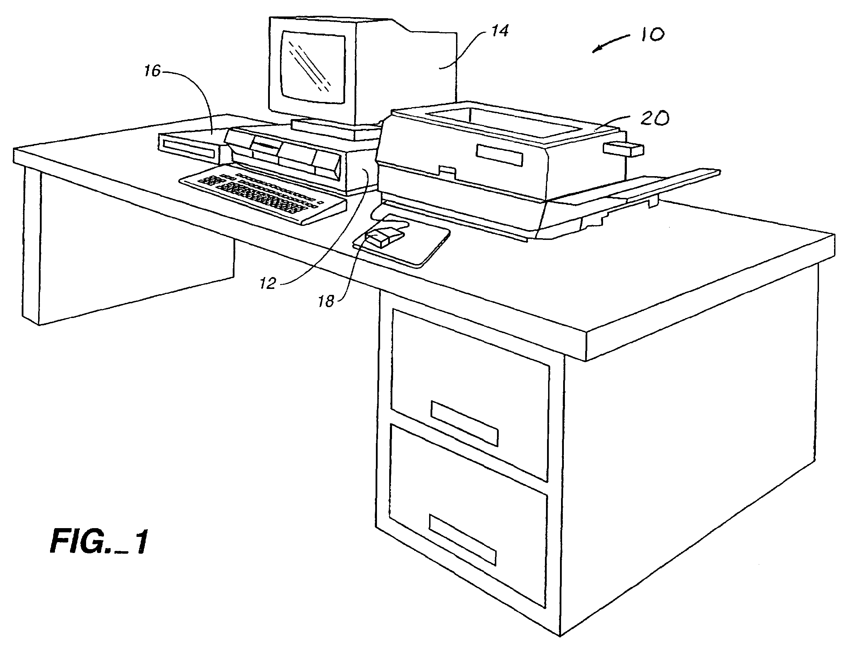

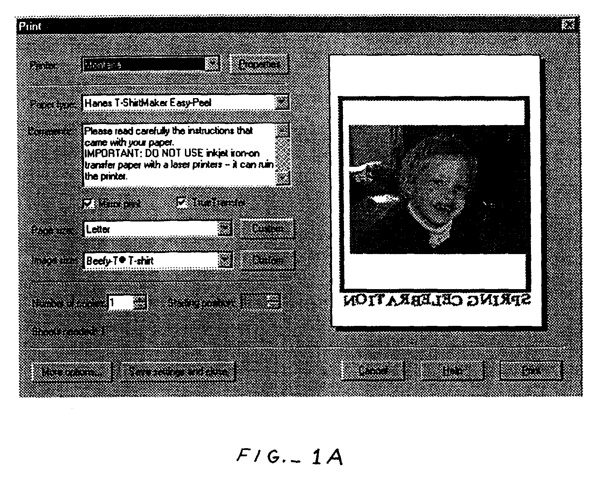

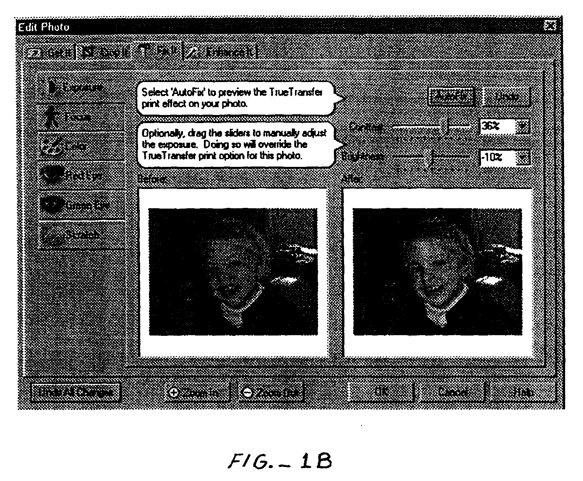

A system for enhancing a rasterized image to be applied to an article in accordance with a preferred embodiment of the present invention, generally indicated by the numeral 10, is shown in Fig. 1. The image enhancement system 10 preferably comprises computer software executed on a computer 12, as shown in Fig. 1. The image enhancement system 10 in accordance with one implementation of the invention is preferably a 32-bit application compatible with a Microsoft Windows 95 or later operating system available from Microsoft, Inc. located in Redmond, Washington. The computer 12 comprises a minimum of 16 MB of random access memory (RAM) and preferably includes 24 MB of RAM. The computer 12 also comprises a hard disk drive having 40 MB of free storage space available. The computer 12 may also be provided with an Internet connection, such as a modem, for connection to web sites of other entities and exchange of e-mail.

In an alternative embodiment, the image enhancement system 10 can be available by connecting to the web site of the supplier of the image enhancement system. The image enhancement system 10 can be ported to the web and executed on a web server. Consequently, the requirements for the computer 12 would be reduced.

Means for displaying information preferably in the form of a monitor 14 connected to the computer 12 is also provided. The monitor 14 can be a 640 x 480, 8-bit (256 colors) VGA monitor and is preferably an 800 x 600, 24-bit (16 million colors) SVGA monitor. The computer 12 is also preferably connected to a CD-ROM drive 16. As shown in Fig. 1, a mouse 18 is provided for mouse-driven navigation between screens or windows comprising the image enhancement system 10. The mouse 18 also enables persons utilizing the image enhancement system 10 (referred to hereafter as "users") to review an image and print the image using a printer 20 onto transfer paper or directly onto an article.

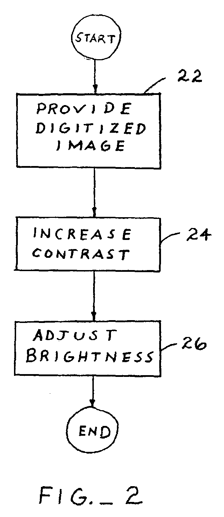

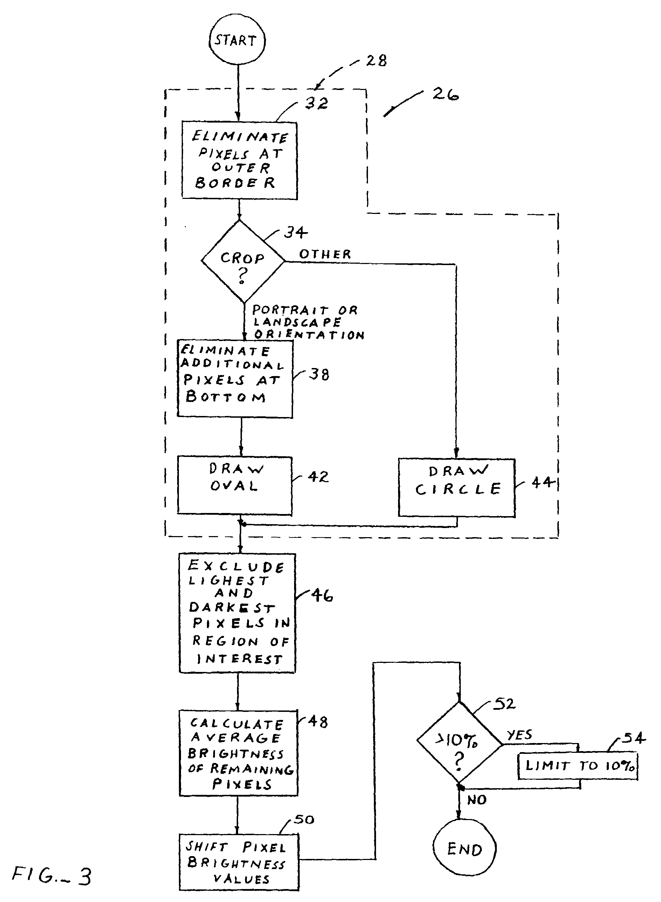

As mentioned earlier, the image enhancement system 10 also comprises computer software or code which may be initially supplied on a CD-ROM readable by the CD-ROM drive 16 or downloadable over the Internet. The code implements the method in accordance with the invention, which will now be described in conjunction with the flow charts which appear in Figs. 2 and 3.

The image enhancement system 10 is preferably "on" by default. The user can preferably turn the image enhancement system 10 "off" or "on" by toggling a "True Transfer" check box which appears in a Print dialog box which is displayed by the monitor 14, as shown in Fig. 1A, to override the default or re-enable the image enhancement system, respectively.

As shown in Fig. 2, a digitized image is provided, as indicated by a step 22. The digitized image is preferably a rasterized image comprising a plurality of pixels, each pixel having a contrast value and a brightness value. The digitized image is preferably a color image comprising various color values (i.e., RGB values), as well. The image may originate as a photograph acquired by a conventional camera and scanned by a commercially available scanner. Alternatively, the image may originate as a digital photograph acquired by a commercially available digital camera or a frame of a digital video camera or other digital image source.

Considered in more detail, a significant application of the computer software which comprises the image enhancement system 10 is to process a digitized photographic image to be applied to an article. However, if an artist creates a decorative design using a drawing software package, the same problems may arise. Consequently, the image enhancement system 10 processes rasterized images, since rasterized images constitute images where contrast and brightness adjustments are clearly applicable. Rasterized, scanned, digitized images can be acquired by scanning or digital photography including photographs of fine art, such as a Matisse or Rembrandt painting, and computer art using a drawing software package. The image enhancement system 10 applies to raster images, that is, applies to any image that has been scanned or rendered as a form of pixels or rendered as a matrix of pixels of varying values, i.e., as a bit map. Any rasterized image can be enhanced, not merely rasterized photographs, but any rasterized image.

Preferably, the next step is to increase the contrast of the digitized image, as indicated by a step 24 shown in Fig. 2. The computer software which comprises the image enhancement system 10 preferably has the ability to increase contrast in one of two ways. In accordance with the preferred embodiment of the present invention, the code can automatically increase the contrast by approximately 30 to 50 percent and, more particularly, by approximately 28 to 37 percent. If the user does not enable an automatic increase in contrast, the user can preferably manually increase contrast by a desired amount. The increase of contrast consistently provides an enhanced appearance of the resulting applied image.

The amount of contrast is increased by a given percentage, in the range of 28 to 50 percent, as follows. What is meant by a percentage increase in the value of contrast is a percentage increase with respect to the average value of contrast on an absolute brightness scale. As described above, based on empirical tests, the contrast is increased approximately 30 to 50 percent depending on the photographic image. A 50 percent increase in contrast may be too great an increase for some photographs, but a 30 percent increase in contrast can be empirically demonstrated to be effective for virtually all photographs. More specifically, based on a substantial amount of empirical data, it was discovered that a contrast increase of approximately 28 to 50 percent and preferably around 28 to 37 percent will enhance the image quality of substantially all applied images. The percentage in the increase of contrast is in relation to an absolute scale of possible contrast values for pixels. The mechanism for the increase of contrast and the scale will now be described in more detail.

The percentage increase of contrast is effected as follows. Percent increase in contrast means an increase in the relative brightness and darkness of pixels so that the darkness of each pixel that is darker than the average on the absolute brightness scale is increased by the given percentage and the brightness of each pixel that is lighter than the average is increased by the given percentage.

In a preferred implementation of the computer software comprising the image enhancement system 10, photo manipulation software is provided, preferably Leadtools™ which is a tool set or specific photo or image processing tool package available from Lead Technologies located in Charlotte, North Carolina. The photo manipulation software contains libraries that are used to perform low-level contrast and brightness adjustment, that is, a set of libraries that can be called within the code to manipulate images. Internally, the values of the brightness of the pixels are shifted based on a 0 to 255 absolute brightness scale to increase contrast of the pixels, as well as to adjust brightness as will be described in more detail later.

The image processing tools used to modify both contrast and brightness operate based on increments of one tenth of a percent. Consequently, when the brightness is adjusted by 10 percent, the brightness is actually adjusted by a value of 100. Internally, there is a brightness range for each pixel based on an absolute scale between 0 and 255, or 256 different levels of brightness in a pixel. If the brightness is adjusted, the percentage of adjustment is actually a percentage based on the 256 level absolute brightness scale.

When contrast is increased, the brightness values of the pixels are shifted away from the median, where 128 is the median value between 0 and 255 on the absolute brightness scale. All pixels having a brightness value of 128 and greater are shifted by the percentage increase in contrast to a higher value with a limit of 255, and all pixels having a brightness value below 128 are shifted by the percentage increase in contrast to a lower value with a limit of zero. Consequently, the shift of the brightness values of the pixels effectively increases contrast as the percentage of contrast increases, shifting brightness values of the pixels away from the median point, that is, internally modifying the brightness of pixels along the 0 to 255 absolute brightness scale away from the median value of 128.

For example, assume that the brightness values of three pixels are 10, 128, and 200 on the absolute brightness scale 0 to 255. If a 30 percent increase in contrast were applied, the brightness values for the three pixels would be shifted to 7, 166, and 260, respectively.

The correlation of the increase in contrast to an absolute brightness scale will be understood by persons skilled in the art to obviate any differences that may appear among various commercially available photo and image manipulation software, such as PhotoShop™ available from Adobe located in San Jose, California. Consequently, an approximate 30 to 50 percent and preferably 27 to 38 percent increase in contrast for any photo or image manipulation software is essentially the same when referenced to an absolute brightness scale for a pixel of 0 to 255 levels of brightness.

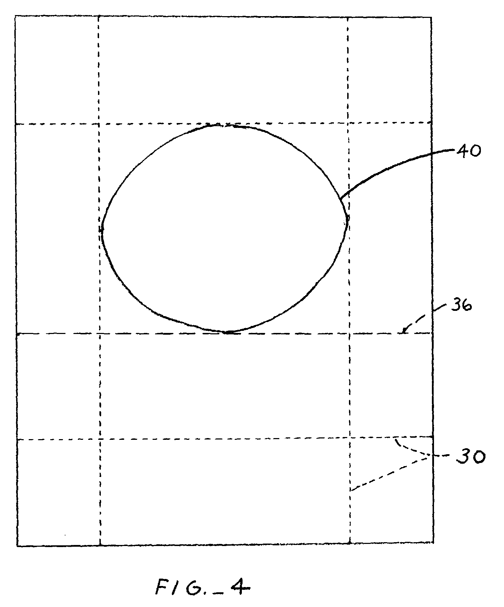

In accordance with the preferred embodiment of the present invention, the contrast is initially increased, as determined by the step 24. For example, the contrast can be increased by approximately 30 percent. Additionally, the brightness of the image is also preferably adjusted after the contrast is increased, as indicated by a step 26 shown in Fig. 2. The adjustment of brightness is based on an analysis of the image, as will now be explained in more detail in conjunction with Figs. 3 and 4.

The aforementioned empirical tests divulged that an adjustment of the brightness after the contrast is increased can provide a further enhancement of the applied image. However, a question arose whether to decrease the brightness (i.e., darken the image) or increase the brightness (i.e., lighten the image). A computer analysis of the individual pixels of the image did not produce any correlation with the empirical data as to whether or not to darken or lighten the image. That is, in studying photographic images, an internal property of the image that the computer 12 could analyze regarding adjustment of brightness based on the data structure of those images could not be identified. The conclusion was reached that there does not readily exist a foundation in the bits and bytes which comprise the photographic image upon which to base a determination to darken or lighten the pixels to enhance the image to be applied. The ultimate conclusion was that whether to darken or lighten the image depends on the subject of the photograph, rather than the data structure of the individual bits and bytes which comprise the photographic image.

For example, the empirical tests demonstrated that if the photograph is of a person who is back-lighted and whose face appears relatively dark, the applied image is enhanced if the image to be applied is lightened. That is, the user typically desires to lighten a photograph of a person to reduce shadows on the face of the person who appears in the photograph. Consequently, the empirical tests demonstrated that whether to darken or lighten the image was related to the content of the photograph and could not readily be deduced by the computer 12 from the bits and bytes of the image to be applied.

The results of the empirical tests were reviewed to determine whether or not photographic images could be analyzed to ascertain indicia of the content of the photograph and then further analyze the pixels to adduce whether to darken or lighten the image to enhance the applied image. Accordingly, the method in accordance with the present invention evolved to concentrate on portions of photographic images which are critical and then analyze the bits and bytes of those portions of the images. The method in accordance with one embodiment of the present invention that evolved will now be described in more detail.

Initially, the digitized photograph or other digitized rasterized image is processed to identity a key region of interest, as indicated by a step 28 shown in Fig. 3. Based on the empirical tests, identification of the region of interest depends on the subject of the image. Moreover, it has been discovered that the majority of applied images are photographic applications in which the portrait of a person is the image that is applied. For example, based on the library of photographs that was assembled, if the photograph is a picture of a person, what a user is most interested in viewing is the face, and, therefore, what the user desires to adjust are the pixels of the photograph associated with the face in order to obtain the optimal image of the face. Although obviously biased towards faces or portraits, nevertheless, non-portraits, for example, landscape scenes, were included in the sample of photographs employed to validate the method of the present invention to assure that determination of a region of interest optimized for portraits did not adversely impact images of other content, such as a panoramic landscape. Furthermore, the computer software which comprises the image enhancement system 10 cannot determine from the bits and bytes whether the photograph is a portrait (e.g., a person) or a landscape (e.g., a scene). Therefore, the region of interest optimized for locating a face in a portrait should not impair results with other types of photographs, such as landscapes, for example.

Accordingly, rules were developed for determining where faces or other critical content appear in the photographs which comprised the library of photographs amassed in connection with the empirical tests. It was discovered, for example, that the location of a face or faces typically depends on whether the photograph has a portrait orientation or a landscape orientation. In the case of a portrait orientation, the face typically appears in the center of the photograph and in the upper two-thirds of that photograph. In the case of a landscape orientation, there is typically a group of persons whose faces appear across the photograph in the upper two-thirds of that photograph. The computer software which comprises the image enhancement system 10 may also enable the user to crop a photographic image to provide a square, circle, or star-shaped crop, which can also preferably be processed. Accordingly, a crop can be defined as an image in portrait or landscape orientation (i.e., the entire photograph without a user-selected crop) or a square, circle, star-shaped, or other user-selected format (i.e., with a user-selected crop). The region of interest in accordance with the present invention is a subset of a photographic image or, if cropped by the user, a subset of the crop or, using the foregoing more general definition for crop, simply a subset of the crop. The computer software which comprises the image enhancement system 10 can then reliably pinpoint an area of the image which is typically of most interest to the user when an applied image is produced.

Generally, in accordance with the method of the present invention, a region of interest can be identified that begins with a crop and then, based on empirical data, further zooms in on an area where the critical content of the image statistically resides. Stated differently, the region of interest is a defined subset of pixels in an image.

For example, a portrait in portrait orientation is illustrated in Fig. 4. In order to determine the region of interest, initially, the pixels comprising the outer one-fifth border are preferably discarded, as indicated by the areas outside the dotted lines 30 shown in Fig. 4 and as indicated by a step 32 shown in Fig. 3. The reason for eliminating the pixels from the edges of the portrait shown in Fig. 4 is that a photographer does not typically capture anything of critical interest at the extreme edge of a photograph.

The next step depends on the crop itself. On the one hand, if the photograph has a portrait or landscape orientation, as determined by a step 34 shown in Fig. 3, another fifth of the pixels at the bottom of the photograph is preferably discarded, as indicated by the area below the dashed line 36 shown in Fig. 4 and as indicated by a step 38 shown in Fig. 3. On the other hand, if the crop is a user-selected square, circle, or star-shaped crop, as determined at the step 34 shown in Fig. 3, no additional fifth of the pixels is removed at the bottom of the reduced image, since the assumption is that the image is already sufficiently cropped at the bottom. The reduction in the number of pixels by the steps 32 and 38 assumes that the region of interest is statistically the upper middle portion of the photograph, that is, centered in the second and third fifths from the top of the photograph.

Then, within the area of pixels that remains, the computer software that comprises the image enhancement system 10 draws an oval 40, as shown in Fig. 4 and as indicated by a step 42 shown in Fig. 3. In the case of a portrait orientation, as shown in Fig. 4, the oval 40 is vertically oriented and tangent at the top and sides to the dotted lines 30 and tangent at the bottom to the dashed line 36. In the case of a landscape orientation, the oval is horizontally oriented. In the case of a user-selected square, circle, or star-shaped crop, the computer software draws a circle (not shown) instead of the oval 40, as indicated by a step 44 shown in Fig. 3. The oval 40 or circle (not shown) effectively eliminates additional areas of pixels which statistically are not of critical interest, that is, removes the corners from the previously reduced area of the image to thus further zoom in on the area of interest.

In summary, the steps 32 through 44 create a grid and exclude pixels within the grid that typically are not critical to the content of the image. On the one hand, the excluded pixels are disregarded relative to image enhancement by adjustment of brightness. On the other hand, the area remaining within the oval 40 or circle (not shown) becomes the region of interest. As the image is manipulated to adjust brightness, only the bits and bytes in the region of interest are preferably considered with respect to a determination of brightness adjustment. That is, only the pixels comprising the region of interest are considered for the purpose of brightness adjustment. Then, based on the analysis of the pixels in the region of interest, the pixels for the entire image can be adjusted for brightness, although it has been discovered that a better transfer can be produced when only the pixels in the region of interest are considered for the purpose of analysis to produce the brightness adjustment.

After the region of interest is determined to identify the pertinent area of the digitized image, the computer software which comprises the image enhancement system 10 actually alters the pixel values of the image to effectively shift the distribution of the brightness, namely, the relative darkness and lightness of the pixels, by adjusting the brightness values of the pixels toward the median. Typically, the actual distribution of the brightness of the pixels in an image fits under a bell-shaped distribution curve, and the brightness adjustment in accordance with the method of the present invention shifts that curve more to the center point of brightness and darkness so that the distribution curve is more centered in the range, that is, more of the pixels reside in the center of the bell-shaped curve. Specifically, the brightness values of the pixels are modified to increase darkness or lightness or, stated differently, decrease brightness or increase brightness, respectively, so that more pixels are within the first standard deviation from the median brightness.

The computer software which comprises the image enhancement system 10 preferably adjusts the brightness of the pixels automatically. Specifically, the computer 12 performs a specialized analysis of the histogram of the brightness values of the pixels within the region of interest. That is, the computer 12 only analyzes the brightness values of the critical pixels.

Initially, the extreme light pixels and extreme dark pixels are preferably excluded so that the lightest and darkest pixels are not considered in the analysis, as indicated by a step 46 shown in Fig. 3. Preferably, the lightest and darkest pixels are determined as percentages of the total distribution of the brightness values of the pixels within the region of interest.

Empirical tests were employed to determine what percentages of the lightest and darkest pixels to exclude. Specifically, if a very dark artifact appeared in a photograph, such as a shadow, the dark artifact is preferably not considered when the distribution curve of brightness values is shifted, and, additionally, if a very bright artifact appeared in the photograph, for example, a white blouse, the light artifact is not considered. The reason for excluding extreme light and dark pixel values is to avoid skewing the brightness adjustment based on extreme pixel brightness values, since better transfers are produced when shades having slight gradation corresponding to medium brightness values of pixels, such as flesh tones and areas that are near the median, are considered the most critical.

Accordingly, as determined at the step 46, the computer 12 excludes the extremes of light and dark values of pixels from the histogram. That is, a percentage of the extreme light pixels and a percentage of the extreme dark pixels within the region of interest are excluded. Preferably, the highest two percent of the pixels having the lightest values and the lowest 18 percent of the pixels having the darkest values are excluded.

After the two percent brightest and 18 percent darkest pixels within the region of interest are excluded, such that the extremes of light and dark pixels are eliminated, the brightness values of the remaining pixels are further analyzed to determine an amount by which all pixels are effectively shifted toward the middle of the bell-shaped distribution curve to effect a brightness adjustment. The computer software comprising the image enhancement system 10 initially calculates the average value of brightness of the remaining pixels in the region of interest after the extreme light and dark pixels are excluded, as indicated by a step 48 shown in Fig. 3. Then, after the average of the brightness values of the remaining pixels in the region of interest is calculated, the average value is shifted by a percentage of the average toward 50 percent, as indicated by a step 50 shown in Fig. 3. Stated differently, given the actual average brightness of the remaining pixels within the region of interest, that average is shifted toward the median of the available brightness range, i.e., the brightness value of 128 on the absolute brightness scale of 0 to 255. The shift can be higher toward 50 percent corresponding to the value of 128 on the absolute brightness scale or lower toward 50 percent, depending on the average value of brightness of the pixels within the region of interest. The shift of the brightness toward 50 percent corresponding to the value 128 on the absolute brightness scale is preferably capped at plus or minus 10 percent of the average brightness, as will be described in more detail below.

For example, assume that the average brightness value of the pixels remaining in the region of interest is 46 percent after the two percent extreme light and 18 percent extreme dark pixels are excluded. Consequently, the brightness value of each pixel is shifted plus four percent, and if a pixel has a brightness value of 25 percent corresponding to 64 on the absolute brightness scale, the brightness value of the pixel would be increased by four percent to 67. That is, all of the pixels of the image are increased in brightness by four percent. If the average brightness value of the pixels remaining in the region of interest were 54 percent, then the brightness values of all pixels are decreased in brightness by 4 percent. Consequently, if a pixel has a brightness value of 25 percent corresponding to 64 on the absolute brightness scale, the brightness value of the pixel would be decreased by four percent to 61.

It was also discovered, based on empirical tests, that the range of brightness adjustment that is desirable is typically less than the range of contrast adjustment that is desirable. Whereas most users would select an increase in contrast by approximately 30 to 50 percent, and preferably 28 to 37 percent, depending on the image, based on empirical tests, those users would select a decrease or increase in brightness of probably no greater than approximately 10 percent of the average brightness value of the pixels within the region of interest. Consequently, the computer software that comprises the image enhancement system 10 preferably caps the amount of the brightness adjustment, either lighter or darker, at 10 percent of the average brightness value, as indicated by steps 52 and 54 shown in Fig. 3. Therefore, the average brightness of the remaining pixels in the region of interest after the two percent lightest and 18 percent darkest pixels are excluded is calculated, and the brightness values of all pixels are shifted higher or lower toward the 50 percent brightness level corresponding to 128 on the absolute brightness scale, but the brightness values of the pixels are shifted no more than 10 percent.

As a result, the brightness values of the most critical pixels are preferably shifted into the first, or at most second, standard deviation from the average value of brightness on the absolute brightness scale. However, if a greater than 10 percent adjustment in brightness toward darker or lighter would result, the brightness shift is preferably readjusted to the cap value of 10 percent as the limit.

In summary, in accordance with the preferred embodiment of the method of the present invention, contrast is initially increased by 28 to 37 percent. It has been generally discovered that any decrease in contrast would be counterproductive to producing better applied images. Additionally, in the case of certain images, it is desirable to increase brightness, and in the case of other images, it is desirable to decrease brightness, in either case limiting the brightness adjustment to plus or minus 10 percent of the average brightness value of the pixels within the region of interest after extreme light and dark pixels are excluded. Consequently, the average brightness value of the pixels within the region of interest of the image after the exclusion of the lightest two percent and darkest 18 percent of the pixels is calculated, and, based on a priori knowledge of what the median brightness should be statistically and what the brightness range is, the brightness values of all pixels are shifted toward that median point for the brightness adjustment. Since the median point is preferably defined as 50 percent, the computer software that comprises the image enhancement system 10 shifts the brightness values of all pixels toward the median brightness of 50 percent, that is, calculates the average brightness of the pixels and shifts the average to 50 percent, corresponding to 128 on the absolute brightness scale, if possible.

The image enhancement system 10 automatically enhances images to be applied to an article irrespective of the original digitized rasterized image, printer, driver, printer cartridge, and any associated transfer paper. As will be understood by persons skilled in the art, variations in the quality of the applied image result depending on the quality of the source image, printer, driver, printer cartridge, and any associated transfer paper, but given any combination of those variables, the image enhancement system 10 produces an improvement in the applied image. For example, if a user were to select a favorite digitized photograph, import the image into his or her favorite photo manipulation software, such as Adobe PhotoShop™, simply print the image to any transfer paper, transfer the image to any fabric, and then repeat the process using the image enhancement method in accordance with the present invention and hold the resulting pieces of fabric side-by-side, testing has demonstrated that the typical user will prefer the enhanced image that was applied.

In summary, increasing the contrast and adjusting the brightness in accordance with the present invention provide better quality applied images. Preferably, the image enhancement is performed programmatically in computer software so that users are not required to become experts in the use of photo or image manipulation software in order to obtain a better quality applied image.

In accordance with the preferred embodiment of the present invention, the contrast of the image to be applied is increased before the brightness is adjusted. However, persons skilled in the art will readily understand that an alternative embodiment can be provided in which brightness is adjusted prior to increasing contrast. However, it is expected that the result may be different if one adjusts brightness before contrast is increased. Specifically, when contrast is initially increased in accordance with the preferred embodiment of the present invention, the increase of the contrast automatically adjusts the original brightness, that is, impacts the relative brightness of the pixels of the image and affects the subsequent brightness adjustment.

While various embodiments of the image enhancement system 10 have been described above, it will be apparent to persons skilled in the art that additional modifications and alternatives are contemplated. For example, an analytical process can be provided to increase contrast as in the case of the brightness adjustment. That is, contrast could be adjusted based on calculation of the distribution of pixel values. In this regard, as contrast is increased, the gradation in color decreases, i.e., colors appear to coalesce and at some point the image begins to degrade. Accordingly, the contrast could be increased until the level at which colors appear to coalesce, and then the contrast value could be slightly reduced below that level so that the contrast is at the greatest value and just below the level at which definition in the image begins to be lost. Also, although image enhancement is preferably performed automatically, the image enhancement can alternatively be effected by the user in an interactive manner through an auto-fix function where the brightness and/or contrast adjustments otherwise provided automatically can be activated by user selection of an "AutoFix" button, as shown in Fig. 1B, or as menu selections or brightness and contrast adjustment check boxes, for example. Furthermore, surveillance technology may be incorporated to enable content, such as the face of a person, to be identified within an image based on digitizing the image and detecting artifacts in the image by image recognition or pattern recognition, for example, to identify a face within a floral backdrop. Image or pattern recognition could be applied to enhance the determination of the region of interest by way of compositional analysis, that is, image recognition preferably would be performed within a specified area. Also, a region of interest can be applied to adjust any of various properties of an image, for example, brightness, contrast, hue, and/or saturation. Moreover, photo manipulation filters, such as water color effects, mosaic, solarization, etc., can be applied to the region of interest. Additionally, theoretically, the user could be provided with access to the printer controls and/or drivers to enter adjustments for producing enhanced images. Also, while the foregoing embodiments have been described for the enhancement of digitized rasterized images, the principles of the invention may be applicable to vector images, because vector images are rasterized by a printer. Vector images are typically rendered on the fly by the computer by reading a series of instructions, and such vector images tend to have more spot colors, illustrations, lines, and fewer and more simple elements than raster images. Vector images contain a much smaller range of colors, so there is conceivably less of a problem of low contrast in the image being output.

In the foregoing specification, the present invention has been described with reference to specific embodiments thereof It will, however, be evident that various additional modifications and changes may be made thereto without departing from the broader spirit and scope of the invention. The specification and drawings are, accordingly, to be regarded in an illustrative rather than in a restrictive sense. The present invention should not be construed as limited by such embodiments and examples, but rather construed according to the following claims.

## Claims

1. A system for enhancing a digitized image to be applied to an article, the system comprising:
means (12) for processing a digitized image; and
means coupled to the processing means (12) for adjusting (24, 26) at least one of contrast and brightness of the digitized image to enhance the image prior to the image being applied to the article.

2. The system as defined in claim 1 wherein both the contrast and brightness are adjusted to enhance the digitized image.

3. The system as defined in claim 2 wherein the contrast is adjusted prior to the time that the brightness is adjusted.

4. The system as defined in any of claims 1 to 3 wherein the contrast is increased to enhance the digitized image.

5. The system as defined in claim 4 wherein the contrast is increased by approximately 28 to 50 percent.

6. The system as defined in any of claims 1 to 5 wherein the brightness is one of increased and decreased to enhance the digitized image.

7. The system as defined in claim 6 wherein the brightness is adjusted by not greater than approximately 10 percent.

8. The system as defined in any of claims 1 to 7, further comprising means coupled to the adjusting means (12) for ascertaining (28) a region of interest within the digitized image to analyze for determining an amount for the adjustment.

9. A system for enhancing a digitized image to be applied to an article, the system comprising:
means (12) for processing a digitized image;
means coupled to the processing means (12) for adjusting (24, 26) a property of the digitized image to enhance the image prior to the image being applied to the article; and
means coupled to the adjusting means (12) for ascertaining (28) a region of interest within the digitized image to analyze for determining an amount for the adjustment

10. The system as defined in claim 9 wherein the property is brightness.

11. The system as defined in claims 8 or 9 wherein predetermined extremes of light and dark are eliminated (46) from the region of interest.

12. The system as defined in claim 11 wherein the two percent most light and 18 percent most dark are excluded.

13. The system as defined in claims 11 or 12 wherein brightness is adjusted based on the average brightness after exclusion of the extremes.

14. The system as defined in claim 13 wherein the adjustment of brightness is limited to approximately 10 percent of the average.

15. A method for enhancing a digitized image to be applied to an article, comprising the steps of:
processing a digitized image to be applied to the article; and
adjusting (24, 26) at least one of contrast and brightness of the digitized image to enhance the image prior to the image being applied to the article.

16. The method as defined in claim 15 wherein both the contrast and brightness are adjusted to enhance the digitized image.

17. The method as defined in claim 16 wherein the contrast is adjusted prior to the time that the brightness is adjusted.

18. The method as defined in any of claims 15 to 17 wherein the contrast is increased to enhance the digitized image.

19. The method as defined in claim 18 wherein the contrast is increased by approximately 28 to 50 percent.

20. The method as defined in any of claims 15 to 19 wherein the brightness is one of increased and decreased to enhance the digitized image.

21. The method as defined in claim 20 wherein the brightness is adjusted by not greater than approximately 10 percent.

22. The method as defined in any of claims 15 to 21, further comprising the step of ascertaining (28) a region of interest within the digitized image to analyze for determining an amount for the adjustment.

23. A method for enhancing a digitized image to be applied to an article, comprising the steps of:
processing a digitized image to be applied to the article;
adjusting (24,26) a property of the digitized image to enhance the image prior the image being applied to the article; and
ascertaining (28) a region of interest within the digitized image to analyze for determining an amount for the adjustment.

24. The system as defined in claim 23 wherein the property is brightness.

25. The method as defined in claims 22 or 23 wherein predetermined extremes of light and dark are eliminated (46) from the region of interest.

26. The method as defined in claim 25 wherein the two percent most light and 18 percent most dark are excluded.

27. The method as defined in claims 25 or 26 wherein brightness is adjusted based on the average brightness after exclusion of the extremes.

28. The method as defined in claim 27 wherein the adjustment of brightness is limited to approximately 10 percent of the average.
